# EUROPEAN PATENT APPLICATION

(11) **EP 4 404 084 A1**
(43) Date of publication of application: **24.07.2024**
(21) Application number: 23187157.5
(22) Date of filing: 24.07.2023
(51) Int. Cl.: G06F 16/955

(54) **INFORMATION PROCESSING APPARATUS AND PROGRAM**

(30) Priority: 20.01.2023 JP 2023007437
(71) Applicant: FUJIFILM Business Innovation Corp., Minato-ku Tokyo (JP)
(72) Inventor: TAKAHASHI, Tomoya, Yokohama-shi, Kanagawa (JP)
(74) Representative: Kurig, Thomas

(57) **Abstract**

An information processing apparatus includes a processor configured to: acquire a Web page; acquire input information that is information input by a user; and generate a thumbnail image for the acquired Web page using the acquired input information.

## Description

### BACKGROUND OF THE INVENTION

### (i) Field of the Invention

The present invention relates to an information processing apparatus and a program.

### (ii) Description of Related Art

JP2008-78942A discloses a process that selects one of a plurality of candidate images as a representative image and reduces the selected representative image to generate a thumbnail.

### SUMMARY OF THE INVENTION

In generation of a thumbnail image for a Web page, in a case in which the thumbnail image is generated according to only one predetermined condition, a difference in the generated thumbnail image is less likely to occur. In this case, it is difficult for a user to recognize the Web page based on the thumbnail image.

An object of the present invention is to make it easier to recognize a Web page based on a thumbnail image, as compared to a case in which a thumbnail image is generated according to only one predetermined condition.

According to a first aspect of the present invention, there is provided an information processing apparatus including a processor configured to: acquire a Web page; acquire input information that is information input by a user; and generate a thumbnail image for the acquired Web page using the acquired input information.

According to a second aspect of the present invention, in the information processing apparatus according to the first aspect, the processor may be configured to: acquire a Web page designated by the user; and generate a thumbnail image for the Web page designated by the user using the input information.

According to a third aspect of the present invention, in the information processing apparatus according to the first or second aspect, the processor may be configured to generate a thumbnail image including at least a portion of an image that is specified on the basis of the acquired input information among images included in the acquired Web page.

According to a fourth aspect of the present invention, in the information processing apparatus according to any one of the first to third aspects, the processor may be configured to generate a thumbnail image including at least a portion of an image, to which information whose similarity to the acquired input information exceeds a predetermined threshold value is attached, among images included in the acquired Web page.

According to a fifth aspect of the present invention, in the information processing apparatus according to the fourth aspect, the processor may be configured to: acquire a character string as the input information; and generate a thumbnail image including at least a portion of an image that includes a character string whose similarity to the acquired character string exceeds a predetermined threshold value among the images included in the acquired Web page.

According to a sixth aspect of the present invention, in the information processing apparatus according to the third aspect, the processor may be configured to, in a case in which the Web page includes a plurality of images specified on the basis of the acquired input information, generate a thumbnail image including at least a portion of an image that satisfies a predetermined condition among the plurality of images.

According to a seventh aspect of the present invention, in the information processing apparatus according to the first aspect, the processor may be configured to generate the thumbnail image on the basis of an in-page character string that is specified on the basis of the input information among in-page character strings that are character strings included in the Web page.

According to an eighth aspect of the present invention, in the information processing apparatus according to the seventh aspect, the processor may be configured to generate a thumbnail image including at least a portion of an image that has a predetermined positional relationship with the in-page character string specified on the basis of the input information among images included in the Web page.

According to a ninth aspect of the present invention, in the information processing apparatus according to the seventh or eighth aspect, the processor may be configured to: acquire an input character string that is a character string input by the user as the input information; and generate the thumbnail image on the basis of an in-page character string that is specified on the basis of the input character string among the in-page character strings included in the Web page.

According to a tenth aspect of the present invention, in the information processing apparatus according to any one of the seventh to ninth aspects, the processor may be configured to, in a case in which there are a plurality of the in-page character strings specified on the basis of the input information, generate the thumbnail image on the basis of an in-page character string that satisfies a predetermined condition among the plurality of in-page character strings.

According to an eleventh aspect of the present invention, in the information processing apparatus according to any one of the first to tenth aspects, the processor may be configured to, in a case in which it is not possible to perform the generation of the thumbnail image using the input information, generate a thumbnail image including at least a portion of an image that satisfies a specific condition among images included in the Web page.

According to a twelfth aspect of the present invention, in the information processing apparatus according to any one of the first to eleventh aspects, the processor may be configured to: further acquire a setting condition that is a condition set by the user for the generation of the thumbnail image; and generate a thumbnail image for the Web page using the acquired setting condition and the acquired input information.

According to a thirteenth aspect of the present invention, in the information processing apparatus according to any one of the first to twelfth aspects, the processor may be configured to generate the thumbnail image using the input information that is input by the user and that is displayed in association with a display portion for the thumbnail image to be generated.

According to a fourteenth aspect of the present invention, in the information processing apparatus according to the thirteenth aspect, a pre-generation image that is a predetermined image may be displayed in the display portion before the thumbnail image is generated, and the processor may be configured to generate the thumbnail image using the input information that is input by the user after the pre-generation image is displayed and that is displayed in association with the pre-generation image.

According to a fifteenth aspect of the present invention, there is provided a program causing a computer to implement: a function of acquiring a Web page; a function of acquiring input information that is information input by a user; and a function of generating a thumbnail image for the acquired Web page using the acquired input information.

According to the first aspect of the present invention, it is possible to more easily recognize the Web page based on the thumbnail image, as compared to a case in which the thumbnail image is generated according to only one predetermined condition.

According to the second aspect of the present invention, it is possible to generate the thumbnail image for the Web page designated by the user.

According to the third aspect of the present invention, it is possible to generate the thumbnail image including at least a portion of an image that is specified on the basis of the input information among the images included in the Web page.

According to the fourth aspect of the present invention, it is possible to generate the thumbnail image including at least a portion of an image to which information similar to the input information is attached among the images included in the Web page.

According to the fifth aspect of the present invention, it is possible to generate the thumbnail image including at least a portion of an image that includes a character string similar to the input character string among the images included in the Web page.

According to the sixth aspect of the present invention, in a case in which the Web page includes a plurality of images specified on the basis of the acquired input information, it is possible to generate the thumbnail image including at least a portion of an image that satisfies a predetermined condition among the plurality of images.

According to the seventh aspect of the present invention, it is possible to generate the thumbnail image on the basis of an in-page character string that is specified on the basis of the input information among the in-page character strings that are character strings included in the Web page.

According to the eighth aspect of the present invention, it is possible to generate the thumbnail image including at least a portion of an image that has a predetermined positional relationship with the in-page character string specified on the basis of the input information among the images included in the Web page.

According to the ninth aspect of the present invention, it is possible to generate the thumbnail image on the basis of the in-page character string specified on the basis of the input character string among the in-page character strings included in the Web page.

According to the tenth aspect of the present invention, in a case in which there are a plurality of in-page character strings specified on the basis of the input information, it is possible to generate the thumbnail image on the basis of an in-page character string that satisfies a predetermined condition among the plurality of in-page character strings.

According to the eleventh aspect of the present invention, it is possible to generate the thumbnail image even in a case in which it is not possible to perform the generation of the thumbnail image using the input information.

According to the twelfth aspect of the present invention, it is possible to generate the thumbnail image in consideration of the setting condition that is a condition set by the user for the generation of the thumbnail image.

According to the thirteenth aspect of the present invention, it is possible to generate the thumbnail image using the input information that is input by the user and that is displayed in association with the display portion for the thumbnail image to be generated.

According to the fourteenth aspect of the present invention, it is possible to generate the thumbnail image using the input information that is input by the user after the pre-generation image, which is displayed before the generation of the thumbnail image, is displayed and that is displayed in association with the pre-generation image.

According to the fifteenth aspect of the present invention, it is possible to more easily recognize the Web page based on the thumbnail image, as compared to a case in which the thumbnail image is generated according to only one predetermined condition.

### BRIEF DESCRIPTION OF THE DRAWINGS

Exemplary embodiment(s) of the present invention will be described in detail based on the following figures, wherein:
Fig. 1 is a diagram showing an overall configuration of an information processing system;
Fig. 2 is a block diagram showing an example of a hardware configuration of a server apparatus;
Fig. 3 is a block diagram showing an example of a hardware configuration of a terminal apparatus;
Parts (A) to (D) in Fig. 4 are diagrams showing a display process of the terminal apparatus;
Parts (A) to (C) in Fig. 5 are diagrams showing another example of the process;
Parts (A) to (C) in Fig. 6 are diagrams showing still another example of the process;
Parts (A) to (C) in Fig. 7 are diagrams showing a process in a case in which an image having a predetermined positional relationship with a specified in-page character string is an image set in an OGP;

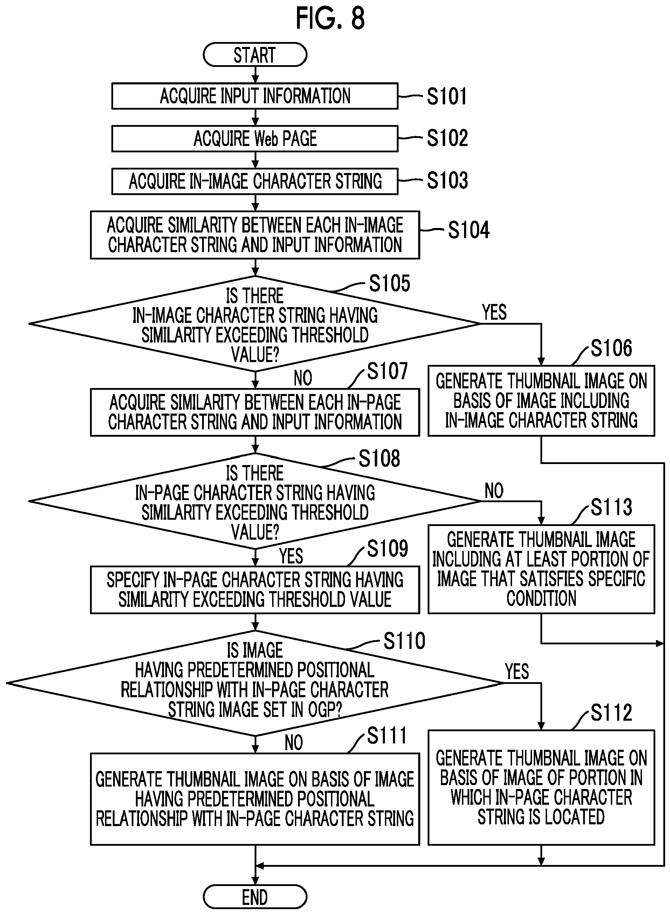

Fig. 8 is a flowchart showing an example of a flow of a process performed by a CPU of the server apparatus;

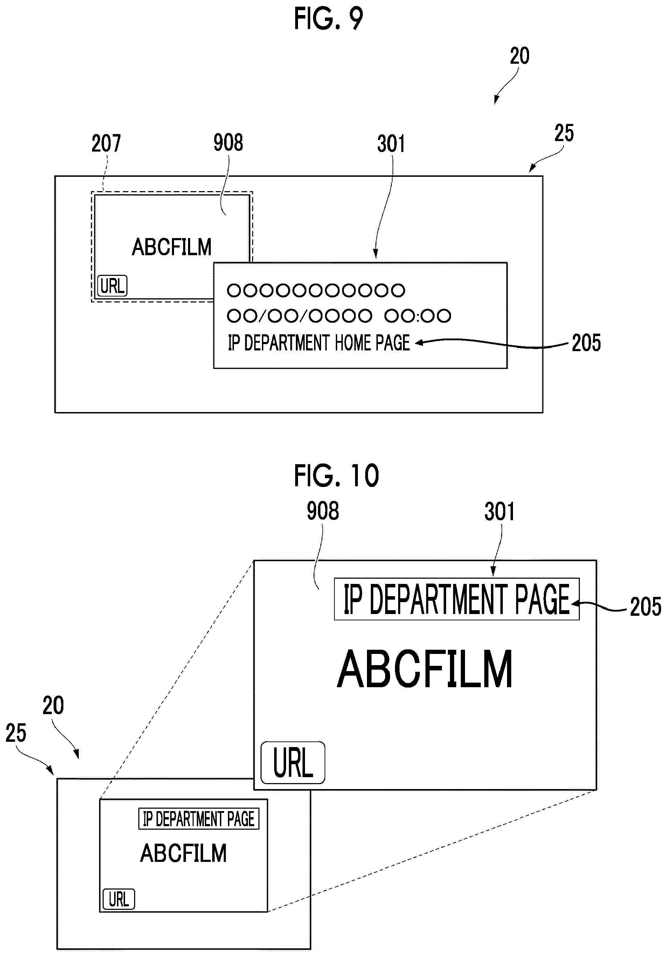

Fig. 9 is a diagram showing another example of a screen displayed on a display unit of the terminal apparatus;
Fig. 10 is a diagram showing another example of the display in the terminal apparatus;

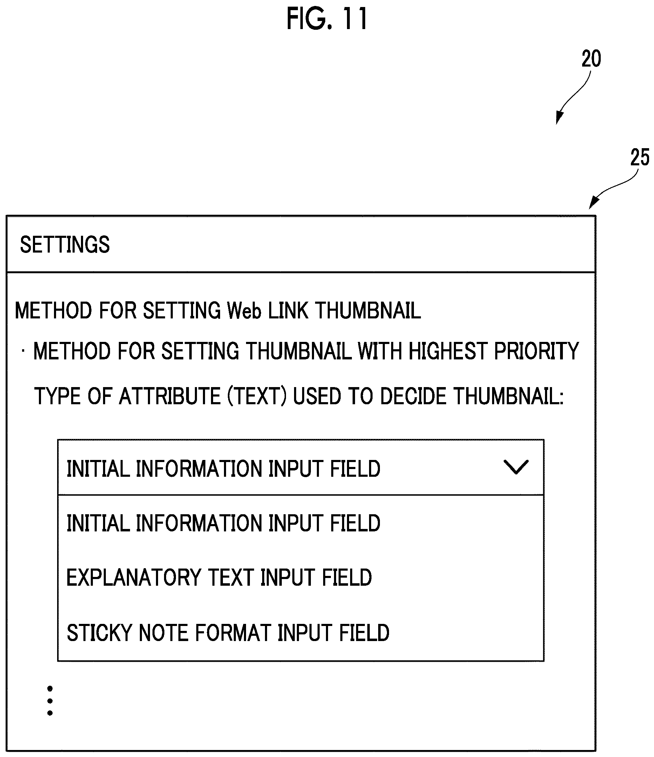

Fig. 11 is a diagram showing a setting screen that is displayed on the terminal apparatus;

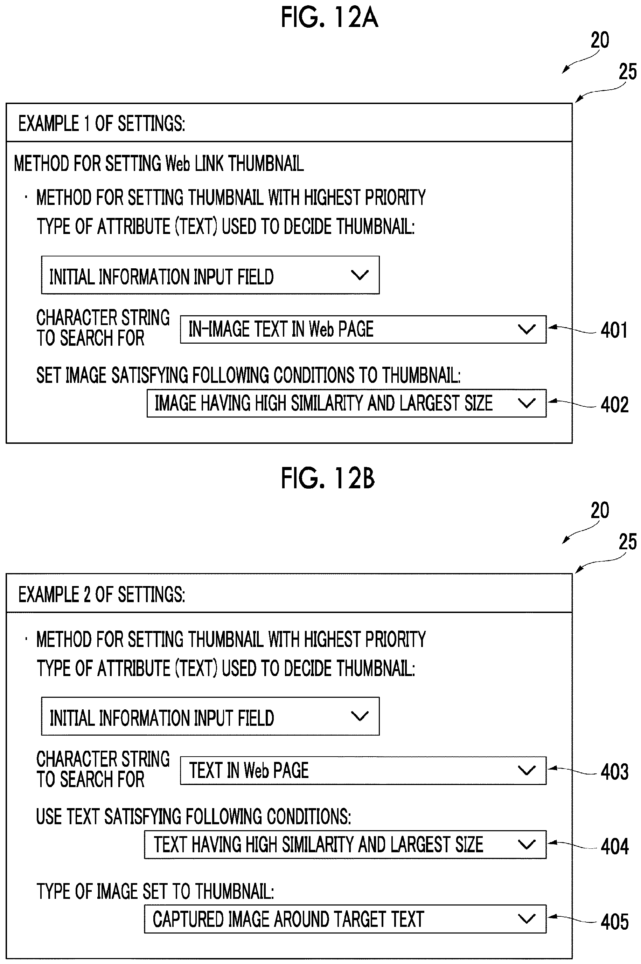

Figs. 12A and 12B are diagrams showing another example of settings of a user performed on the setting screen; and

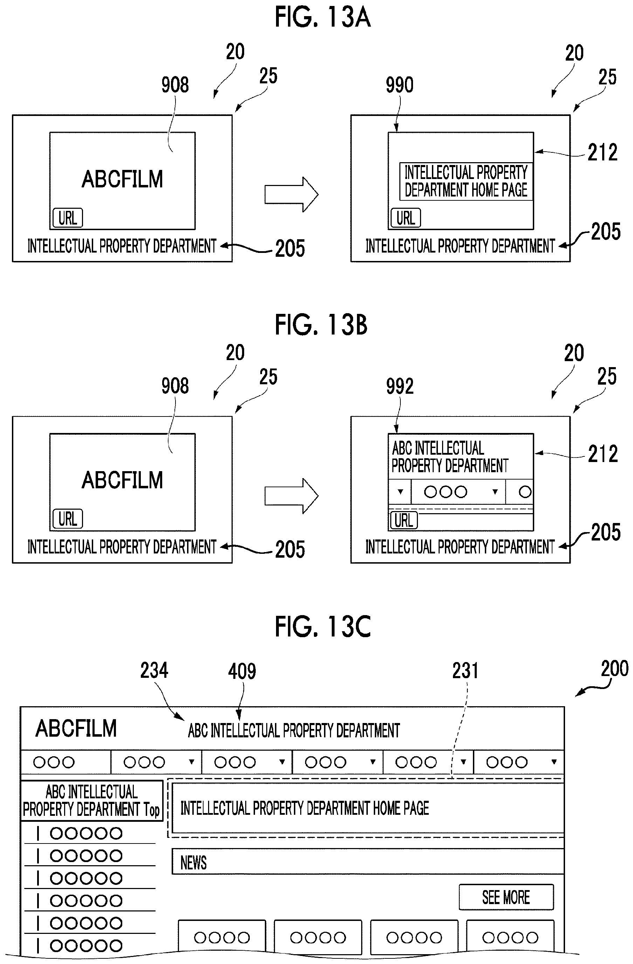

Figs. 13A, 13B, and 13C are diagrams showing a specific example of a process that is performed according to the settings of the user.

### DETAILED DESCRIPTION OF THE INVENTION

Hereinafter, an exemplary embodiment of the present invention will be described with reference to the accompanying drawings.

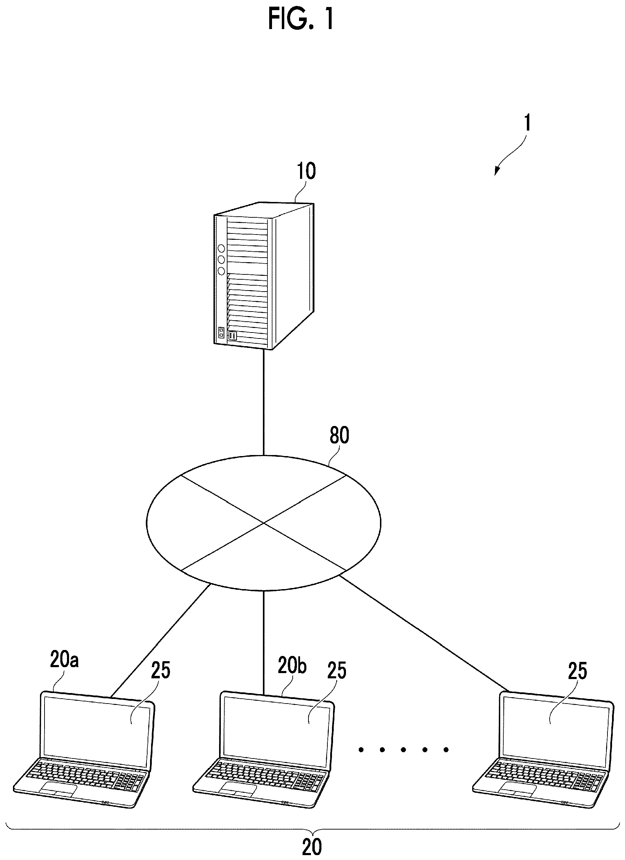

Fig. 1 is a diagram showing an overall configuration of an information processing system 1 according to the present exemplary embodiment.

The information processing system 1 according to the present exemplary embodiment is composed of a server apparatus 10 that generates a thumbnail image and terminal apparatuses 20 (20a, 20b, ...) that are operated by users.

The server apparatus 10 and each of the terminal apparatuses 20 are connected to each other through a communication line 80. The communication line 80 is a line, such as the Internet, and is used for communication between the server apparatus 10 and the terminal apparatus 20.

The server apparatus 10 as an example of an information processing apparatus generates a thumbnail image using information from the terminal apparatus 20.

The server apparatus 10 is implemented by, for example, a computer apparatus. The server apparatus 10 may be configured by a single computer or may be implemented by a distribution process by a plurality of computers.

The terminal apparatus 20 outputs an instruction to generate a thumbnail image and displays the generated thumbnail image.

The terminal apparatus 20 has a display unit 25 that displays the generated thumbnail image. The terminal apparatus 20 is implemented by the computer apparatus.

Examples of the terminal apparatus 20 include a desktop personal computer, a notebook personal computer, a tablet-type information terminal, a smart phone, and a game machine.

In the present exemplary embodiment, a case in which the server apparatus 10 generates a thumbnail image and the generated thumbnail image is displayed on the terminal apparatus 20 will be described as an example.

However, the present invention is not limited thereto. The terminal apparatus 20 may generate a thumbnail image and perform a process of displaying the generated thumbnail image.

The apparatus that generates the thumbnail image is not limited to the server apparatus 10, and an apparatus other than the server apparatus 10 may generate the thumbnail image.

A hardware configuration of the server apparatus 10 will be described.

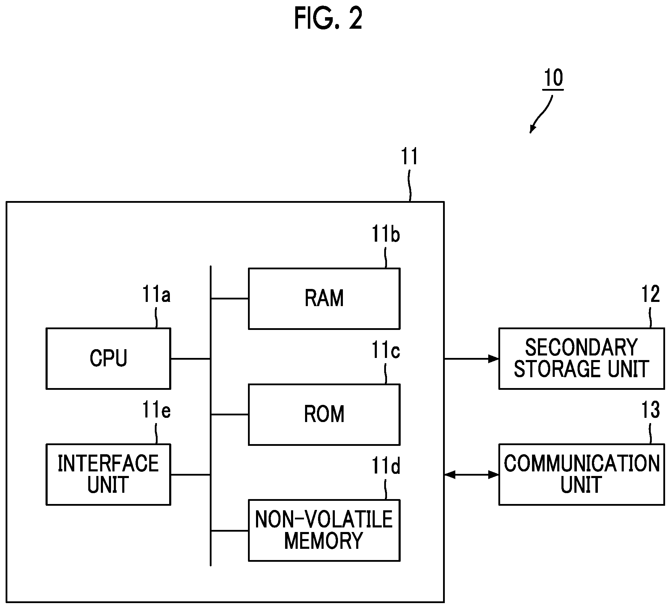

Fig. 2 is a block diagram showing an example of the hardware configuration of the server apparatus 10 according to the present exemplary embodiment.

The server apparatus 10 includes an arithmetic processing unit 11 that performs digital arithmetic processing according to a program, a secondary storage unit 12 that stores information, and a communication unit 13 that transmits and receives information through the communication line 80 (see Fig. 1).

The secondary storage unit 12 is implemented by the existing information storage device, such as a hard disk drive (HDD), a semiconductor memory, or a magnetic tape, and stores various types of information.

The communication unit 13 receives information from the terminal apparatus 20 or a Web server (not shown) or transmits the generated thumbnail image.

The arithmetic processing unit 11 is provided with a CPU 11a as an example of a processor. The CPU 11a performs a process related to the generation of the thumbnail image.

In addition, the arithmetic processing unit 11 is provided with a RAM 11b which is used as a work memory or the like of the CPU 11a and a ROM 11c in which programs or the like executed by the CPU 11a are stored.

Further, the arithmetic processing unit 11 is provided with a non-volatile memory 11d that is configured to be rewritable and holds information even in a case in which power supply is interrupted and an interface unit 11e that controls each unit, such as the communication unit 13, connected to the arithmetic processing unit 11.

The non-volatile memory 11d is configured by, for example, an SRAM or a flash memory that is backed up by a battery and holds information.

The secondary storage unit 12 stores the information related to the generation of the thumbnail image and also stores the programs executed by the arithmetic processing unit 11.

In the present exemplary embodiment, the CPU 11a provided in the arithmetic processing unit 11 reads the program stored in the ROM 11c or the secondary storage unit 12 to perform each process of the server apparatus 10.

The server apparatus 10 generates a thumbnail image using the information from the terminal apparatus 20. Then, the server apparatus 10 transmits the generated thumbnail image to the terminal apparatus 20. Then, the generated thumbnail image is displayed on the terminal apparatus 20.

The program executed by the CPU 11a of the server apparatus 10 can be provided to the server apparatus 10 in a state in which the program is stored in a computer-readable recording medium such as a magnetic recording medium (for example, a magnetic tape or a magnetic disk), an optical recording medium (for example, an optical disk), a magneto-optical recording medium, or a semiconductor memory. In addition, the program executed by the CPU 11a may be provided to the server apparatus 10 by a communication unit such as the Internet.

Next, a hardware configuration of the terminal apparatus 20 will be described.

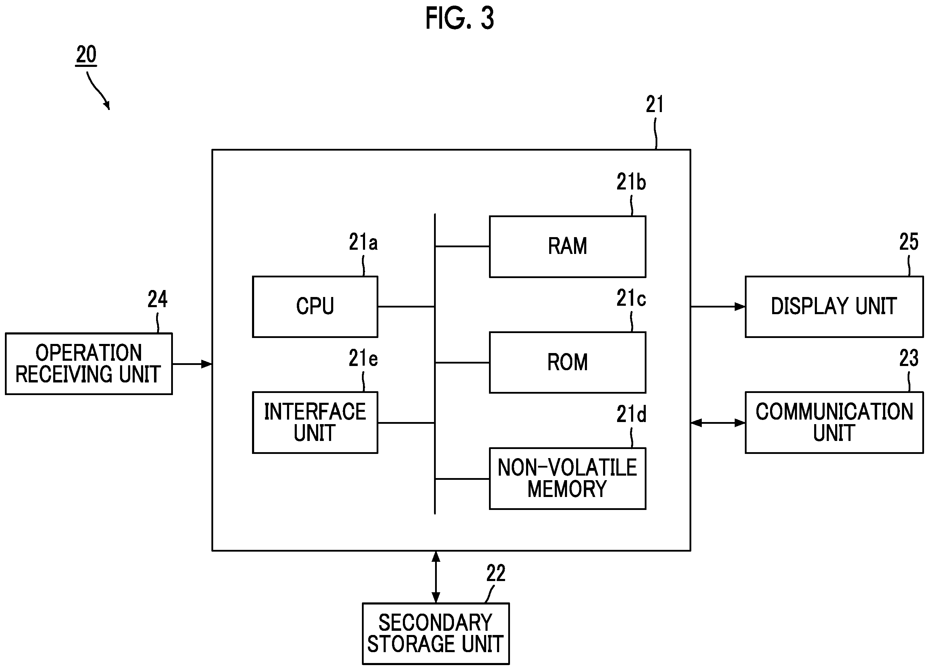

Fig. 3 is a block diagram showing an example of the hardware configuration of the terminal apparatus 20.

Each of the terminal apparatuses 20 includes an arithmetic processing unit 21 that performs various processes according to a program, a secondary storage unit 22 that stores information, and a communication unit 23 that transmits and receives information through the communication line 80 (see Fig. 1).

In addition, each of the terminal apparatuses 20 includes an operation receiving unit 24 that receives an input operation of the user and the display unit 25 that displays, an image, such as a thumbnail image which will be described below, information of text, and the like. The display unit 25 is configured by, for example, a liquid crystal display panel or an organic electroluminescence (EL) display panel.

The secondary storage unit 22 is implemented by the existing information storage device such as a hard disk drive (HDD), a semiconductor memory, or a magnetic tape.

The arithmetic processing unit 21 includes a CPU 21a as an example of the processor. The CPU 21a controls the entire terminal apparatus 20.

In addition, the arithmetic processing unit 21 comprises a RAM 21b that is used as a work memory or the like of the CPU 21a and a ROM 21c in which programs or the like executed by the CPU 21a are stored.

In addition, the arithmetic processing unit 21 comprises a non-volatile memory 21d that is configured to be rewritable and can hold information even in a case in which power supply is interrupted and an interface unit 21e that controls each unit, such as the communication unit 23, connected to the arithmetic processing unit 21.

The non-volatile memory 21d is configured by, for example, an SRAM or a flash memory that is backed up by a battery and holds information.

The secondary storage unit 22 stores, for example, the generated thumbnail image and also stores the programs executed by the arithmetic processing unit 21.

In the present exemplary embodiment, the CPU 21a provided in the arithmetic processing unit 21 reads the program stored in the ROM 21c or the secondary storage unit 22 such that various processes are performed in the terminal apparatus 20.

The operation receiving unit 24 is a functional unit that receives information input by the user.

An example of the operation receiving unit 24 is a touch panel. In this case, the user performs an operation of bringing a finger or the like into contact with the touch panel to input information. In response to this, the operation receiving unit 24 receives the input information.

The form of the operation receiving unit 24 is not particularly limited, and the existing known operation receiving units may be used. Another example of the operation receiving unit 24 is a keyboard comprising a plurality of keys to be pressed by the user.

The program executed by the CPU 21a provided in the terminal apparatus 20 can be provided to the terminal apparatus 20 in a state in which the program is stored in a computer-readable recording medium such as a magnetic recording medium (for example, a magnetic tape or a magnetic disk), an optical recording medium (for example, an optical disk), a magneto-optical recording medium, or a semiconductor memory. In addition, the program executed by the CPU 21a may be provided to the terminal apparatus 20 by a communication unit such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

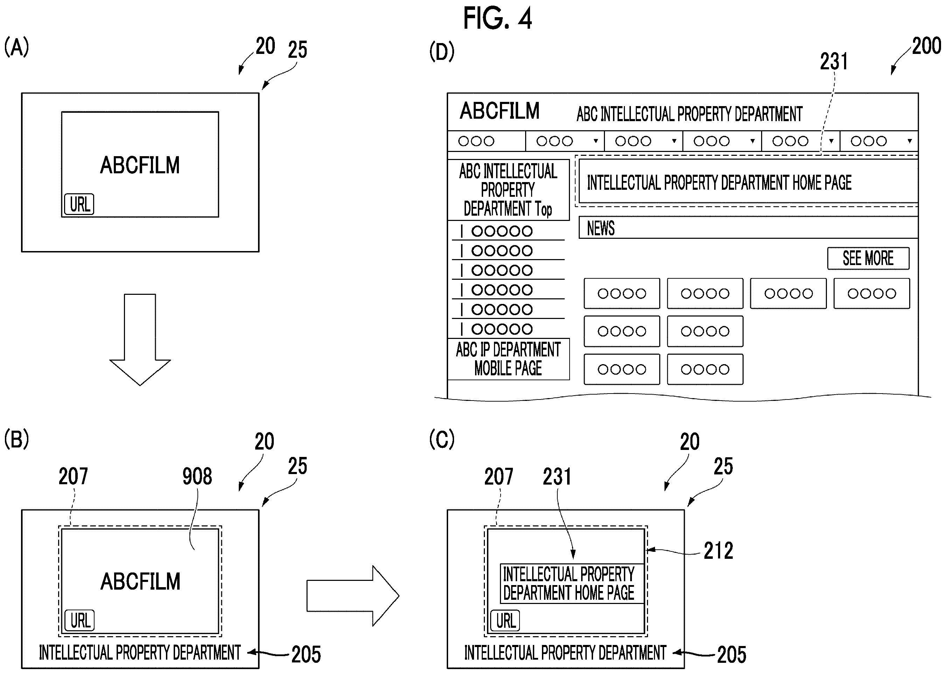

Parts (A) to (D) in Fig. 4 are diagrams showing a display process of the terminal apparatus 20.

In the present exemplary embodiment, in a case in which the user wants to generate a thumbnail image for a Web page 200 shown in the part (D) in Fig. 4, the user performs a predetermined operation on the terminal apparatus 20 (see Fig. 1).

Specifically, the user performs an operation of designating the Web page 200 for which a thumbnail image is desired to be generated. More specifically, the user performs an operation of inputting a uniform resource locator (URL) which is an example of information for specifying the Web page 200 for which a thumbnail image is desired to be generated.

In addition, in this case, the user performs an operation on the terminal apparatus 20 to further input information such as a keyword.

More specifically, in the present exemplary embodiment, an information input field (hereinafter, an "initial information input field") (not shown) is displayed on the display unit 25 of the terminal apparatus 20.

The user inputs information, such as a keyword, to the initial information input field. In other words, in this case, the user inputs initial information to the initial information input field.

In a case in which the user designates the Web page 200 and inputs the initial information, such as a keyword, a screen shown in the part (B) in Fig. 4 is displayed on the display unit 25 of the terminal apparatus 20 via a screen shown in the part (A) in Fig. 4.

On the screen shown in the part (B) in Fig. 4, a temporary thumbnail image for the Web page 200 designated by the user is displayed in a display portion 207.

In the present exemplary embodiment, for example, an image which is set in an open graph protocol (OGP) among images included in the Web page 200 designated by the user is displayed as the temporary thumbnail image.

Here, the "OGP" means a protocol for displaying the image of the Web page 200 in a case in which the Web page 200 is referred to. In a case in which the image set in the OGP is present in the Web page 200 and the Web page 200 is referred to, the image set in the OGP is displayed.

In the present exemplary embodiment, information related to the Web page 200 designated by the user is transmitted to the server apparatus 10 (see Fig. 1). Then, the server apparatus 10 acquires the image set in the OGP among the images included in the Web page 200 designated by the user and transmits this image to the terminal apparatus 20.

Then, in the present exemplary embodiment, as shown in the part (B) in Fig. 4, the image set in the OGP among the images included in the Web page 200 is displayed as the temporary thumbnail image in the display portion 207 of the display unit 25 in the terminal apparatus 20.

In addition, the temporary thumbnail image is not limited to the image set in the OGP and may be an image that is located at a specific position on the Web page 200 or the largest image among the images included in the Web page 200.

Further, the temporary thumbnail image may be an image that has been registered in advance in the terminal apparatus 20 or the server apparatus 10.

In the present exemplary embodiment, the initial information (hereinafter, referred to as "input information 205"), such as the keyword input by the user, is displayed on the screen shown in the part (B) in Fig. 4.

In this example, a case in which the user inputs a character string "Intellectual property department" as the input information 205 is illustrated. In accordance with this, in the present exemplary embodiment, the character string "Intellectual property department" is displayed as the input information 205 on the display unit 25 of the terminal apparatus 20.

Further, in the present exemplary embodiment, the input information 205 is transmitted from the terminal apparatus 20 to the server apparatus 10, and the CPU 11a (see Fig. 2) of the server apparatus 10 acquires the input information 205.

Specifically, in this example, the CPU 11a acquires the character string "Intellectual property department" as the input information 205.

In the present exemplary embodiment, in the part (B) in Fig. 4, the display portion 207 is a portion in which the thumbnail image (which will be described below) to be generated from now is displayed. Specifically, a portion in which the temporary thumbnail image is displayed is the portion in which the thumbnail image (which will be described below) to be generated from now is displayed.

In the present exemplary embodiment, in a case in which the character string "Intellectual property department", which is an example of the input information 205, is input by the user, the character string "Intellectual property department" is displayed in association with the display portion 207 for the thumbnail image to be generated from now as shown in the part (B) in Fig. 4.

In other words, the character string "Intellectual property department" is displayed in association with the temporary thumbnail image.

In the present exemplary embodiment, a pre-generation image 908, which is a predetermined image, is displayed in the display portion 207 for the thumbnail image to be generated before the thumbnail image is generated. Specifically, in the present exemplary embodiment, the temporary thumbnail image is displayed as the pre-generation image 908.

In the present exemplary embodiment, as described above, in a case in which the user inputs the input information 205, the input information 205 is transmitted from the terminal apparatus 20 to the server apparatus 10, and the server apparatus 10 acquires the input information 205.

Then, in the present exemplary embodiment, the CPU 11a of the server apparatus 10 generates a thumbnail image using the input information 205.

In a case in which the thumbnail image is generated, first, the CPU 11a of the server apparatus 10 acquires the Web page 200 (see the part (D) in Fig. 4) from the Web server (not shown) on the basis of information related to the Web page 200 designated by the user.

Further, as described above, the server apparatus 10 acquires the input information 205 input by the user through the terminal apparatus 20. Specifically, in the example shown in Fig. 4, the server apparatus 10 acquires the character string "Intellectual property department".

Then, the CPU 1 1a of the server apparatus 10 generates a thumbnail image for the Web page 200 on the basis of the acquired input information 205 and the acquired Web page 200.

In the present exemplary embodiment, the CPU 11a of the server apparatus 10 generates a thumbnail image for the Web page 200 designated by the user, using the input information 205.

Then, in a case in which the server apparatus 10 generates the thumbnail image, the generated thumbnail image is transmitted to the terminal apparatus 20.

In a case in which the thumbnail image is transmitted from the server apparatus 10 to the terminal apparatus 20, a generated thumbnail image 212 is displayed on the display unit 25 of the terminal apparatus 20 in accordance with the transmission, as shown in the part (C) in Fig. 4.

More specifically, the generated thumbnail image 212 is displayed in the display portion 207 for the thumbnail image in the display unit 25 of the terminal apparatus 20. More specifically, the generated thumbnail image 212 is displayed in the portion in which the temporary thumbnail image, which is the pre-generation image 908, is displayed.

Further, in the present exemplary embodiment, in a case in which the user selects the generated thumbnail image 212, the Web page 200 corresponding to the thumbnail image 212 is displayed on the terminal apparatus 20.

A process of the server apparatus 10 will be described in detail.

As described above, the CPU 11a of the server apparatus 10 generate the thumbnail image 212 on the basis of the images included in the acquired Web page 200, using the acquired input information 205.

Specifically, the CPU 11a generates the thumbnail image 212 including at least a portion of an image that is specified on the basis of the acquired input information 205 among the images included in the acquired Web page 200.

In the example shown in Fig. 4, a case in which the CPU 11a of the server apparatus 10 specifies a rectangular image 231 including a character string "Intellectual property department home page" among the images included in the Web page 200 shown in the part (D) in Fig. 4 on the basis of the input information 205 of "Intellectual property department" is illustrated.

In this case, the CPU 11a generates the thumbnail image 212 including at least a portion of the specified image 231.

In the example shown in Fig. 4, the CPU 11a generates the thumbnail image 212 including all of the specified image 231 as shown in the parts (C) and (D) in Fig. 4.

In a case in which the thumbnail image 212 is generated, the thumbnail image 212 including all of the specified image 231 may be generated, or the thumbnail image 212 including a portion of the specified image 231 may be generated.

In the present exemplary embodiment, the CPU 11a of the server apparatus 10 specifies an image, to which information whose similarity to the acquired input information 205 exceeds a predetermined threshold value is attached, among the images included in the acquired Web page 200.

Then, the CPU 11a generates the thumbnail image 212 including at least a portion of the specified image.

Here, an image in which information whose similarity to the input information 205 exceeds a predetermined threshold value appears is given as an example of the "image to which information whose similarity to the input information 205 exceeds a predetermined threshold value is attached". However, the present invention is not limited thereto.

In addition, for example, an image with which information whose similarity to the input information 205 exceeds a predetermined threshold value is associated as attribute information is given as an example of the "image to which information whose similarity to the input information 205 exceeds a predetermined threshold value is attached".

In the example of the process shown in Fig. 4, a case in which the CPU 11a of the server apparatus 10 acquires the character string as the input information 205 is illustrated.

Specifically, a case in which the CPU 11a of the server apparatus 10 acquires the character string "Intellectual property department" as the input information 205 is illustrated.

The CPU 11a specifies an image including a character string whose similarity to the acquired character string exceeds a predetermined threshold value among the images included in the acquired Web page 200 (see the part (D) in Fig. 4).

In the example shown in Fig. 4, the CPU 11a specifies the image 231 in which a character string whose similarity to the acquired character string exceeds a predetermined threshold value appears among the images included in the acquired Web page 200.

Specifically, the CPU 11a specifies the image 231 including the character string "Intellectual property department home page".

Then, the CPU 11a generates the thumbnail image 212 including at least a portion of the specified image 231.

In the example shown in Fig. 4, as shown in the part (B) in Fig. 4, an input character string, which is a character string that has been input, is "Intellectual property department".

As shown in the part (D) in Fig. 4, the Web page 200 includes the image 231 including the character string "Intellectual property department home page" which is a character string whose similarity to the input character string exceeds a predetermined threshold value.

In this case, the CPU 11a specifies the image 231 including the character string "Intellectual property department home page" and generates the thumbnail image 212 (see the part (C) in Fig. 4) including at least a portion of the specified image 231.

In a case in which the image which is the basis of the thumbnail image 212 is specified, the CPU 11a of the server apparatus 10 performs an optical character recognition (OCR) process on each of the images included in the acquired Web page 200 to specify a character string included in each of the images included in the acquired Web page 200.

In other words, the CPU 11a of the server apparatus 10 specifies a character string that appears in each of the images included in the acquired Web page 200.

Then, the CPU 11a specifies an image including a character string whose similarity to the input character string exceeds a predetermined threshold value. In the example shown in Fig. 4, the CPU 11a specifies the image 231 (see the part (D) in Fig. 4) including the character string "Intellectual property department home page" whose similarity to the input character string "intellectual property department" exceeds a predetermined threshold value.

Then, the CPU 11a generates the thumbnail image 212 (see the part (C) in Fig. 4) including at least a portion of the specified image 231.

In the present exemplary embodiment, even in a case in which the input character string and the character string obtained by the OCR process are not completely matched with each other, a character string, whose similarity to the input character string is large and exceeds a predetermined threshold value, is specified as the character string that is similar to the input character string by known natural language processing.

In other words, in the present exemplary embodiment, not only a character string which is matched with the input character string but also a character string which is not matched with the input character string and whose similarity to the input character string exceeds a predetermined threshold value is specified.

Then, the CPU 11a generates the thumbnail image 212 including a portion of the image including the specified character string.

More specifically, the CPU 11a calculates the similarity between the input character string and the character string included in each of the images according to a predetermined calculation expression and specifies a character string having a similarity exceeding a predetermined threshold value. Then, the CPU 11a generates the thumbnail image 212 on the basis of the image including the specified character string.

In addition, a process of determining whether or not the character strings are similar to each other may be performed by the existing known technique and is not particularly limited.

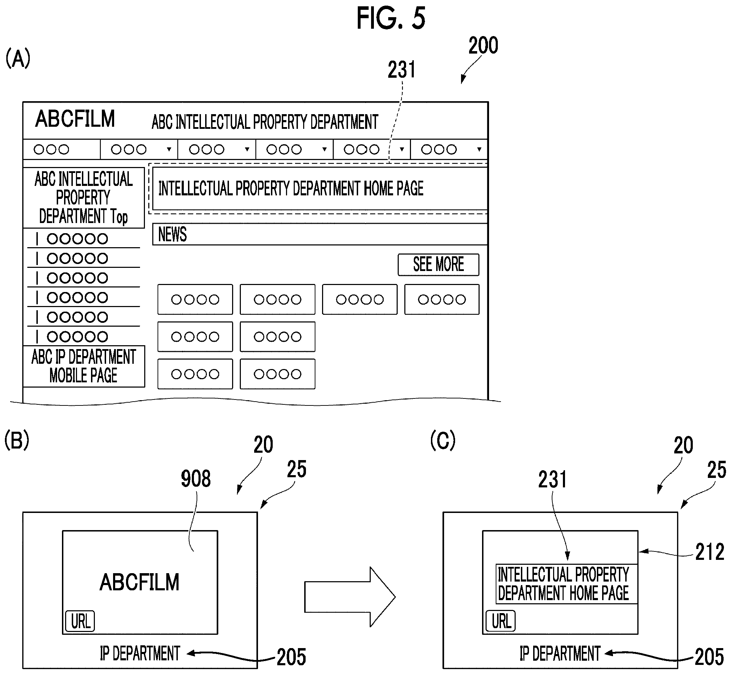

Parts (A) to (C) in Fig. 5 are diagrams showing another example of the process.

In the example of the process shown in Fig. 5, a case in which the user inputs "IP department" as the input character string as shown in the part (B) in Fig. 5 is illustrated. In other words, in the example of the process shown in Fig. 5, a case in which the user inputs the character string "IP department" to the initial information input field of the terminal apparatus 20 is illustrated.

In this example of the process, the Web page 200 (see the part (A) in Fig. 5) includes the image 231 including the character string "Intellectual property department home page" whose similarity to the input character string "IP department" exceeds a predetermined threshold value is present.

In this case, the CPU 11a generates the thumbnail image 212 including at least a portion of the image 231.

As a result, even in this case, as shown in the part (C) in Fig. 5, the thumbnail image 212 that is the same as the thumbnail image 212 shown in the part (C) in Fig. 4 is generated.

In the present exemplary embodiment, as described above, among the images included in the Web page 200, the image 231 including a character string whose similarity to the input character string exceeds a predetermined threshold value is specified.

In addition, a case is assumed in which the Web page 200 includes a plurality of character strings whose similarity to the input character string exceeds a predetermined threshold value.

In other words, a case is also assumed in which the Web page 200 includes a plurality of images 231 including a character string whose similarity exceeds a predetermined threshold value.

In this case, the CPU 11a generates the thumbnail image 212 including at least a portion of the image 231 including a character string that satisfies a predetermined condition among the plurality of character strings having the similarity exceeding the threshold value.

More specifically, in this case, the CPU 11a specifies one image 231 including a character string that satisfies a predetermined condition among the plurality of character strings having the similarity exceeding the threshold value and generates the thumbnail image 212 on the basis of the one specified image 231.

Here, an example of the character string which satisfies the predetermined condition among the plurality of character strings having the similarity exceeding the threshold value is a character string that has been first determined to have the similarity exceeding the threshold value.

In the present exemplary embodiment, for each character string that is present in the images included in the Web page 200, the CPU 11a of the server apparatus 10 sequentially compares each character string that is present in the images included in the Web page 200 with the input character string which is an example of the input information 205.

Then, the CPU 11a determines whether or not each character string that is present in the images included in the Web page 200 has the similarity exceeding the threshold value. In this case, any one of a plurality of character strings determined to have the similarity exceeding the threshold value is set as the character string first determined to have the similarity exceeding the threshold value.

An example of the character string which satisfies the predetermined condition among the plurality of character strings having the similarity exceeding the threshold value is the character string that has been first determined to have the similarity exceeding the threshold value.

In this case, the CPU 11a generates the thumbnail image 212 on the basis of an image including a character string that has been first determined to have the similarity exceeding the threshold value by the CPU 11a among the plurality of character strings having the similarity exceeding the threshold value.

In addition, the CPU 11a may specify, for example, a character string that has the highest similarity to the input character string among the plurality of character strings having the similarity exceeding the threshold value as the character string satisfying the predetermined condition. In this case, the CPU 11a generates the thumbnail image 212 that includes at least a portion of the image including the character string having the highest similarity.

Here, an example of the character string having the highest similarity to the input character string is a character string that is the same as the input character string. In this case, the thumbnail image 212 is generated on the basis of the image including the character string that is the same as the input character string.

In addition, in a case in which there are a plurality of character strings satisfying a predetermined condition and there are a plurality of images that are the basis of the thumbnail image 212, the CPU 11a may generate the thumbnail image 212 including at least a portion of an image that satisfies the predetermined condition among the plurality of images.

In other words, in a case in which the Web page 200 includes a plurality of images that are specified on the basis of the acquired input information 205, the CPU 11a may generate the thumbnail image 212 on the basis of the image that satisfies a predetermined condition among the plurality of images.

More specifically, for example, the CPU 11a may generate the thumbnail image 212 including at least a portion of an image that is located at a specific position in the Web page 200 or that is located at a position closest to the specific position among the plurality of images. Here, an example of the specific position is the upper left of the Web page 200.

In this case, the CPU 11a generates the thumbnail image 212 including at least a portion of an image that is located at the upper left or that is located at a position closest to the upper left among the plurality of images.

A characteristic image is more likely to be located at the upper left of the Web page 200, as compared to positions other than the upper left of the Web page 200.

In a case in which the thumbnail image 212 including at least a portion of the image that is located at the upper left of the Web page 200 or that is located at a position closest to the upper left is generated, the thumbnail image 212 in which the characteristic image has been reflected is generated.

In addition, in a case in which there are a plurality of images satisfying a predetermined condition, the CPU 11a may generate the thumbnail image 212 including, for example, at least a portion of an image that has a specific size among the plurality of images.

More specifically, the CPU 11a may generate the thumbnail image 212 including, for example, at least a portion of the largest image among the plurality of images.

In many cases, the characteristic image is set to a large size, and the largest image is the characteristic image. In a case in which the thumbnail image 212 including at least a portion of the largest image is generated, the thumbnail image 212 in which the characteristic image has been reflected is likely to be generated.

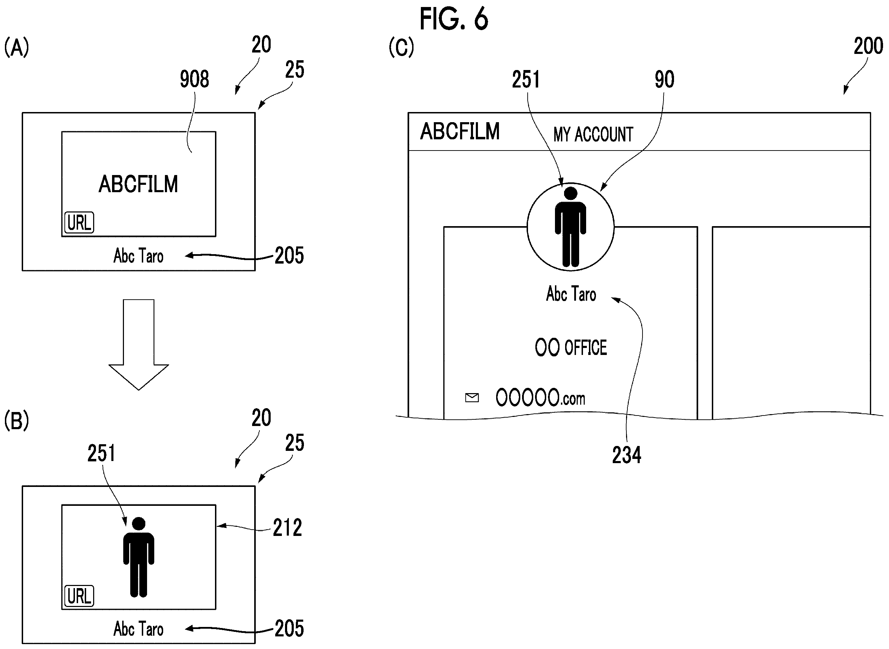

Parts (A) to (C) in Fig. 6 are diagrams showing still another example of the process.

In this example of the process, the CPU 11a generates the thumbnail image 212 shown in the part (B) in Fig. 6 on the basis of an in-page character string 234 which is a character string included in the Web page 200 (see the part (C) in Fig. 6).

More specifically, in this example of the process, the CPU 11a generates the thumbnail image 212 on the basis of the in-page character string 234 that is specified on the basis of the input information 205 (see the part (A) in Fig. 6) among the in-page character strings which are character strings made up of text included in the Web page 200.

More specifically, in this example of the process, the CPU 11a generates the thumbnail image 212 (see the part (B) in Fig. 6) including at least a portion of an image 251 that has a predetermined positional relationship with the in-page character string 234 specified on the basis of the input information 205 among the images included in the Web page 200.

More specifically, in this example of the process, first, the CPU 11a of the server apparatus 10 acquires an input character string which is a character string input by the user as the input information 205 (see the part (A) in Fig. 6). Specifically, in this example, the CPU 11a acquires a character string "Abc Taro" as the input character string.

Then, the CPU 11a specifies the in-page character string 234 that satisfies a predetermined condition from the in-page character strings included in the Web page 200 (see part (C) in Fig. 6) on the basis of the input character string using, for example, XML Path Language (XPath).

Then, the CPU 11a generates the thumbnail image 212 on the basis of the in-page character string 234 specified on the basis of the input character string.

Specifically, the CPU 11a specifies, for example, the in-page character string 234 whose similarity to the input character string exceeds a predetermined threshold value among the in-page character strings and generates the thumbnail image 212 on the basis of the specified in-page character string 234.

More specifically, first, the CPU 11a specifies the in-page character string 234 whose similarity to the input character string exceeds a predetermined threshold value among the in-page character strings.

Then, the CPU 11a generates the thumbnail image 212 including at least a portion of an image that has a predetermined positional relationship with the specified in-page character string 234.

In this specific example shown in Fig. 6, as shown in the part (A) in Fig. 6, the input character string which is an example of the input information 205 is "Abc Taro".

Further, in this specific example, as shown in the part (C) in Fig. 6, the Web page 200 includes "Abc Taro" which is the in-page character string 234 whose similarity to the input character string "Abc Taro" exceeds a predetermined threshold value.

In this case, the CPU 11a of the server apparatus 10 generates the thumbnail image 212 on the basis of "Abc Taro" which is the in-page character string 234.

More specifically, in this case, the CPU 11a generates the thumbnail image 212 including at least a portion of the image 251 that is represented by reference numeral 90 and that has a predetermined positional relationship with "Abc Taro" which is the in-page character string 234 among the images included in the Web page 200 shown in the part (C) in Fig. 6.

Therefore, in the present exemplary embodiment, as shown in the part (B) in Fig. 6, the thumbnail image 212 including the image 251 is displayed on the display unit 25 of the terminal apparatus 20.

Here, an example of the "image having the predetermined positional relationship" is an image that is closest to "Abc Taro" which is the in-page character string 234.

In this case, the image represented by reference numeral 90 in the part (C) in Fig. 6 is specified as the image having a predetermined positional relationship.

More specifically, in the present exemplary embodiment, after the in-page character string 234 is specified, for example, an image that is located at a position closest to the in-page character string 234 on HTML is specified. Therefore, the image represented by reference numeral 90 is specified.

In addition, another example of the image having the predetermined positional relationship is an image that is located above the in-page character string 234, an image that is located below the in-page character string 234, an image that is located on the left side of the in-page character string 234, or an image that is located on the right side of the in-page character string 234.

Here, a case is also assumed in which a plurality of images are present in the Web page 200 and a plurality of the images having the predetermined positional relationship are present.

In this case, one image that satisfies a predetermined specific condition is specified from the plurality of images, and the thumbnail image 212 including at least a portion of the one specified image is generated.

Specifically, in a case in which a plurality of images having a predetermined positional relationship are present, for example, the thumbnail image 212 including at least a portion of the largest image among the plurality of images is generated.

Further, in the process shown in Fig. 6, a case is also assumed in which a plurality of in-page character strings 234 specified on the basis of the input information 205 are present.

In this case, the CPU 11a specifies one in-page character string 234 that satisfies a predetermined condition among the plurality of in-page character strings 234 and generates the thumbnail image 212 on the basis of the one specified in-page character string 234.

More specifically, in this case, the CPU 11a specifies, for example, an in-page character string 234 whose similarity to the input character string has been first determined to exceed a predetermined threshold value among the plurality of in-page character strings 234.

Then, the CPU 11a generates the thumbnail image 212 on the basis of the specified in-page character string 234. More specifically, the CPU 11a specifies an image included in the Web page 200 on the basis of the specified in-page character string 234 and generates the thumbnail image 212 on the basis of the specified image.

The CPU 11a sequentially calculates the similarity between the in-page character string 234 and the input character string for each in-page character string 234 included in the Web page 200 and determines whether or not the calculated similarity exceeds a predetermined threshold value.

In this case, any one of the in-page character strings 234 determined to have the similarity exceeding the threshold value by the CPU 11a is set as the in-page character string 234 first determined to have the similarity exceeding the threshold value.

In this case, the CPU 11a generates the thumbnail image 212 including at least a portion of an image that has a predetermined positional relationship with the in-page character string 234 first determined to have the similarity exceeding the threshold value by the CPU 11a among the plurality of in-page character strings 234 having the similarity exceeding the threshold value.

In addition, the CPU 11a may generate the thumbnail image 212 on the basis of the in-page character string 234 having the highest similarity to the input character string, for example, the in-page character string 234 that is the same as the input character string among the plurality of in-page character strings 234.

More specifically, in this case, the CPU 11a generates the thumbnail image 212 including at least a portion of an image that has a predetermined positional relationship with the in-page character string 234 having the highest similarity to the input character string.

In addition, the CPU 11a may generate the thumbnail image 212 on the basis of, for example, an in-page character string 234 that is located at a specific position in the Web page 200 or that is located at a position closest to the specific position among the plurality of in-page character strings 234.

More specifically, in this case, the CPU 11a generates the thumbnail image 212 including at least a portion of an image having a predetermined positional relationship with the in-page character string 234 that is located at a specific position in the Web page 200 or that is located at a position closest to the specific position.

More specifically, in this case, the CPU 11a generates the thumbnail image 212 including at least a portion of an image having a predetermined positional relationship with, for example, the in-page character string 234 that is located at the upper left of the Web page 200 or the in-page character strings 234 that is located at a position closest to the upper left among the plurality of in-page character strings 234.

In addition, the CPU 11a may generate the thumbnail image 212 on the basis of, for example, the in-page character string 234 that has a specific size among the plurality of in-page character strings 234.

More specifically, the CPU 11a may generate the thumbnail image 212 including at least a portion of an image that has a predetermined positional relationship with, for example, the largest in-page character string 234 among the plurality of in-page character strings 234.

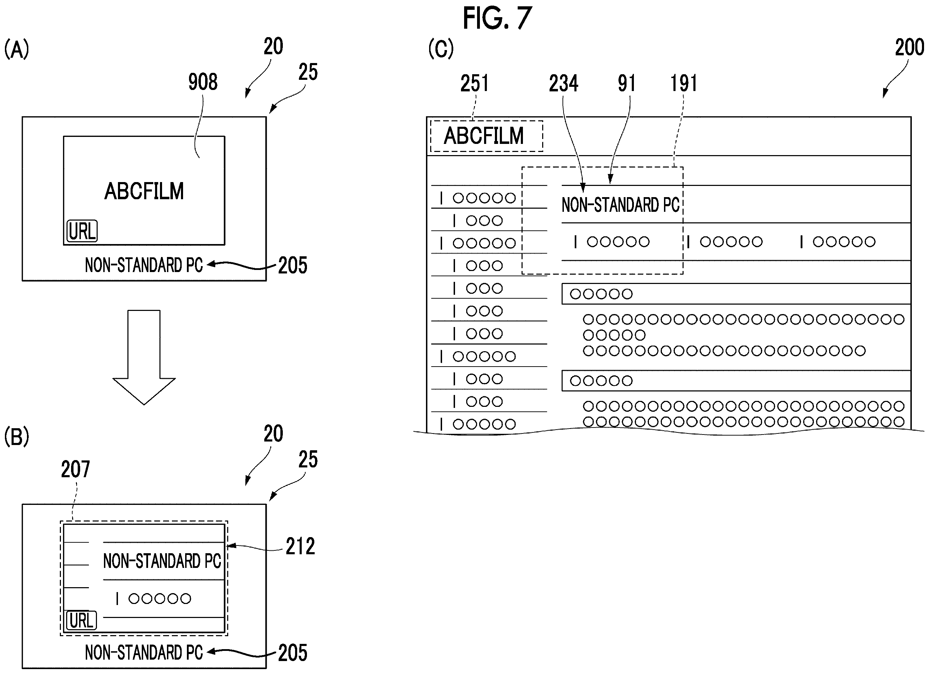

Parts (A) to (C) in Fig. 7 are diagrams showing a process in a case in which the image 251 having a predetermined positional relationship with the specified in-page character string 234 is the image set in the OGP.

In this example of the process shown in Fig. 7, a case in which the input character string is "Non-standard PC" as shown in the part (A) in Fig. 7 and "Non-standard PC" represented by reference numeral 91 in the part (C) in Fig. 7 is the in-page character string is 234 is illustrated.

Further, in this example of the process, the image 251 having a predetermined positional relationship with the specified in-page character string 234 is the image set in the OGP.

Specifically, in the example shown in the part (C) in Fig. 7, an image in which "ABCFILM" is present is the image 251 having the predetermined positional relationship, and the image 251 having the predetermined positional relationship is the image set in the OGP.

In a case in which the image 251 having the predetermined positional relationship with the in-page character string 234 is the image set in the OGP, for example, it is preferable to generate the thumbnail image 212 on the basis of images other than the image 251 set in the OGP.

More specifically, in this case, for example, it is preferable to generate the thumbnail image 212 on the basis of an image acquired by capturing a portion in which the in-page character string 234 is located in the Web page 200 (see the part (C) in Fig. 7).

In other words, for example, it is preferable to generate the thumbnail image 212 including an image of a part of a text portion included in the Web page 200.

Specifically, in this example of the process shown in Fig. 7, for example, it is preferable to generate the thumbnail image 212 including at least a portion of an image of a portion in which "Non-standard PC" which is the in-page character string 234 is located in the Web page 200.

In this case, the CPU 11a acquires an image including both the portion in which "Non-standard PC" is located and a portion which is located around this portion in the Web page 200 by capture and generates the thumbnail image 212 that includes at least a portion of the image including both the portions.

More specifically, in this example of the process, the CPU 11a acquires an image of a portion that is located inside a rectangular frame represented by reference numeral 191 in the Web page 200 by capture and generates the thumbnail image 212 including at least a portion of the acquired image.

In a case in which an image of a portion in which the in-page character string 234 is located in the Web page 200 is acquired, for example, it is preferable to acquire the image of not only the portion in which the in-page character string 234 is located but also a portion that is located around this portion as described above.

In this case, there is a high possibility that the user who views the thumbnail image 212 displayed in a display portion 207 (see the part (B) in Fig. 7) will not recognize the thumbnail image 212 as an image on which the character string is simply displayed, but will recognize the thumbnail image 212 as an image related to the Web page 200.

In addition, in a case in which the image of not only the portion in which the in-page character string 234 is located but also a portion located around this portion is acquired by capture, for example, it is preferable to locate the in-page character string 234 at the center of the generated thumbnail image 212.

Further, in a case in which the image of not only the portion in which the in-page character string 234 is located but also a portion located around this portion is acquired by capture, for example, it is preferable that two to three lines of text located above and below the in-page character string 234 are included in the thumbnail image 212.

In addition, in a case in which the thumbnail image 212 is generated on the basis of an image other than the image set in the OGP, the thumbnail image 212 may be generated on the basis of the second closest image to the specified in-page character string 234.

Further, in a case in which the thumbnail image 212 is generated on the basis of an image other than the image set in the OGP, for example, the thumbnail image 212 may be generated on the basis of an image that has a predetermined positional relationship with the in-page character string 234 having the second highest similarity to the input character string.

In a case in which the thumbnail image 212 is generated on the basis of the image set in the OGP, the generated thumbnail image 212 is likely to be an image in which the degree of reflection of the input information 205 input by the user is low, for example, an image based on the image that represents the Web page 200.

On the other hand, in a case in which the thumbnail image 212 is generated on the basis of the image acquired by capturing the portion in which the in-page character string 234 is located as in the present exemplary embodiment, the thumbnail image 212 in which the degree of reflection of the input information 205 is high is generated, as compared to a case in which the thumbnail image 212 is generated on the basis of the image set in the OGP.

Further, in the above description, in a case in which the image having a predetermined positional relationship with the in-page character string 234 is the image set in OGP, the thumbnail image 212 is generated on the basis of the image of the portion in which the in-page character string 234 is located.

Here, the generation of the thumbnail image 212 based on the image of the portion in which the in-page character string 234 is located is not limited to this. In a case in which the in-page character string 234 is specified, the thumbnail image 212 may be generated on the basis of the image of the portion in which the in-page character string 234 is located.

In other words, the thumbnail image 212 may not be generated on the basis of the image having a predetermined positional relationship with the in-page character string 234, but may be generated on the basis of the portion in which the in-page character string 234 is located.

In this configuration, in a case in which the CPU 11a specifies the in-page character string 234, the CPU 11a acquires an image of a portion in which the in-page character string 234 is located in the Web page 200, without considering an image having a predetermined positional relationship with the in-page character string 234, and generates the thumbnail image 212 on the basis of this image.

In the generation of the thumbnail image 212, the thumbnail image 212 may not be generated on the basis of an image that is present in a portion other than the portion in which the in-page character string 234 is located, but may be generated on the basis of the image of the portion in which the in-page character string 234 is located.

Here, the following three processes have been broadly described above.

The following three processes have been described: a first process that generates the thumbnail image 212 on the basis of an image including a character string specified on the basis of the input character string; a second process that generates the thumbnail image 212 on the basis of an image having a predetermined positional relationship with the in-page character string 234; and a third process that generates the thumbnail image 212 on the basis of an image of the portion in which the in-page character string 234 is located.

All of the three processes are not necessarily performed, and only one of the three processes may be performed.

Further, while all of the first to third processes are performed, any one of the first to third processes may be performed according to conditions as described below.

Fig. 8 is a flowchart showing an example of a flow of a process performed by the CPU 11a of the server apparatus 10.

In this process shown in Fig. 8, first, the CPU 11a of the server apparatus 10 acquires the input information 205 which is information input by the user (Step S101).

Then, the CPU 11a acquires the Web page 200 designated by the user (Step S102).

Then, the CPU 11a performs an OCR process to acquire character strings (hereinafter, referred to as "in-image character strings) that are included in each image included in the Web page 200 (Step S103).

Then, the CPU 11a acquires the similarity between each of the in-image character strings and the input information 205 (Step S104).

Then, the CPU 11a determines whether or not there is an in-image character string whose similarity to the input information 205 exceeds a predetermined threshold value (Step S105).

Then, in a case in which the CPU 11a determines that there is an in-image character string having the similarity exceeding the predetermined threshold value, the CPU 11a generates the thumbnail image 212 on the basis of an image including the in-image character string (Step S106).

In addition, a case is assumed in which there are a plurality of in-image character strings and there are a plurality of images including the in-image character strings as described above.

In this case, the CPU 11a specifies one image from the plurality of images on the basis of a predetermined condition and generates the thumbnail image 212 including at least a portion of the one image as described above.

On the other hand, in a case in which the CPU 11a does not determine in Step S105 that there is an in-image character string having the similarity exceeding the predetermined threshold value, the CPU 11a compares each of the in-page character strings 234 with the input information 205 and acquires the similarity between each of the in-page character strings 234 and the input information 205 (Step S107).

Then, the CPU 11a determines whether or not the in-page character string 234 whose similarity to the input information 205 exceeds the predetermined threshold value is present in the text included in the Web page 200 (Step S108).

In the processes of Step S107 and Step S108, the CPU 11a acquires information of the text included in the Web page 200. Then, the CPU 11a determines whether or not the in-page character string 234 whose similarity to the input information 205 exceeds the predetermined threshold value is present in the information of the text.

Then, in a case in which the CPU 11a determines that the in-page character string 234 having the similarity exceeding the threshold value is present, the CPU 11a specifies the in-page character string 234 having the similarity exceeding the threshold value (Step S109).

In addition, as described above, in a case in which there are a plurality of in-page character strings 234 having the similarity exceeding the threshold value, the CPU 11a specifies one in-page character string 234 that satisfies a predetermined condition among the plurality of in-page character strings 234.

Then, the CPU 11a determines whether or not an image having a predetermined positional relationship with the specified in-page character string 234 is the image set in the OGP (Step S110). More specifically, the CPU 11a determines, for example, whether or not an image that is located closest to the specified in-page character string 234 is the image set in the OGP.

Then, in a case in which the CPU 11a does not determine that the image is the image set in the OGP, the CPU 1 1a generates the thumbnail image 212 on the basis of the image having the predetermined positional relationship with the specified in-page character string 234 (Step S 111).

Further, in a case in which there are a plurality of images having the predetermined positional relationship, one image is selected according to a predetermined condition, and the thumbnail image 212 is generated on the basis of the one image as described above.

Here, an example of the predetermined condition is the size of the image. In this case, one image having the largest size is selected from the plurality of images having the predetermined positional relationship, and the thumbnail image 212 is generated on the basis of the one image.

On the other hand, in a case in which the CPU 11a determines in Step S110 that the image having the predetermined positional relationship with the specified in-page character string 234 is the image set in the OGP, the CPU 11a acquires an image of a portion in which the in-page character string 234 is located in the Web page 200 by capture and generates the thumbnail image 212 on the basis of the acquired image (Step S112).

More specifically, in this case, the CPU 11a generates the thumbnail image 212 including at least a portion of the acquired image.

Further, in a case in which it is determined in Step S108 that there is no in-page character string 234 whose similarity to the input information 205 exceeds the predetermined threshold value, the CPU 11a generates the thumbnail image 212 including at least a portion of an image that satisfies a specific condition among the images included in the Web page 200 (Step S113).

In a case in which there is no in-page character string 234 whose similarity to the input information 205 exceeds the predetermined threshold value, the CPU 11a changes to a state in which the CPU 11a is not capable of performing the generation of the thumbnail image 212 using the input information 205.

In this case, the CPU 11a generates the thumbnail image 212 on the basis of an image that satisfies a specific condition among the images included in the Web page 200.

More specifically, in this case, for example, the CPU 11a generates the thumbnail image 212 including at least a portion of the image that is set in the OGP among the images included in the Web page 200.

Further, in this case, for example, the thumbnail image 212 including at least a portion of an image that has a predetermined specific size, such as the largest image, among the images included in the Web page 200 may be generated.

Fig. 9 is a diagram showing another example of the screen displayed on the display unit 25 of the terminal apparatus 20.

In the present exemplary embodiment, as described above and as shown in Fig. 9, before the thumbnail image 212 (not shown in Fig. 9) is generated, a pre-generation image 908, which is a predetermined image, is displayed in the display portion 207 for the thumbnail image 212 to be generated.

More specifically, in the present exemplary embodiment, as described above, a temporary thumbnail image is displayed as the pre-generation image 908.

Further, in this example shown in Fig. 9, a case in which the input information 205 input by the user is displayed after the pre-generation image 908 is displayed is illustrated. Specifically, in this example, a case in which an input character string "IP department home page" is displayed as the input information 205 input by the user after the pre-generation image 908 is displayed is illustrated.

In this example, the input information 205 which is the input character string "IP department home page" is displayed in association with the pre-generation image 908.

The CPU 11a of the server apparatus 10 may generate the thumbnail image 212 using the input information 205 that is input by the user after the display of the pre-generation image 908 and that is displayed in association with the pre-generation image 908.

In this example shown in Fig. 9, a case in which, after the pre-generation image 908 is displayed, an additional information input field 301 is displayed and the user inputs information to the additional information input field 301 is illustrated. In other words, a case in which the input information 205 is input to the additional information input field 301 is illustrated.

In this example, as described above, information "IP department home page" is input as the input information 205 to the additional information input field 301.

In the present exemplary embodiment, first, the input information 205 is input to the initial information input field (not shown) as described above. However, the present invention is not limited thereto. In the present exemplary embodiment, the user inputs information to the additional information input field 301.

The input information 205 used by the CPU 11a of the server apparatus 10 to generate the thumbnail image 212 is not limited to the information input before the pre-generation image 908 is displayed and may be information input by the user after the pre-generation image 908 is displayed, such as the information input to the additional information input field 301.

Here, the additional information input field 301 shown in Fig. 9 is an explanatory text input field which is an input field to which the user enters an explanatory text. This explanatory text input field is utilized, for example, to send a message.

In the present exemplary embodiment, in a case in which the user who wants to generate the thumbnail image 212 inputs information to the explanatory text input field shown in Fig. 9, this information is transmitted to another user who refers to the explanatory text input field.

Therefore, the user who wants to generate the thumbnail image 212 notifies another user of information related to the thumbnail image 212 or information related to the Web page 200 indicated by the thumbnail image 212.

Fig. 10 is a diagram showing another example of the display in the terminal apparatus 20.

Fig. 10 also shows a case in which the additional information input field 301 is displayed after the pre-generation image 908 is displayed.

In this example shown in Fig. 10, a sticky note format input field, which is an information input field of a sticky note format, is displayed as the additional information input field 301. Further, in this example, a case in which, after the pre-generation image 908 is displayed, the sticky note format input field is displayed and the user inputs information to the sticky note format input field is illustrated.

In a case in which the CPU 11a of the server apparatus 10 generates the thumbnail image 212, the input information 205 input to the sticky note format input field may be used.

In this example, the input information 205 input to the sticky note format input field is "IP department page", and the information "IP department page" is transmitted to the server apparatus 10. Then, the CPU 11a of the server apparatus 10 generates the thumbnail image 212 using the input information 205 which is "IP department page".

Fig. 11 is a diagram showing a setting screen that is displayed on the terminal apparatus 20.

In the present exemplary embodiment, the user can perform various settings for the generation of the thumbnail image 212. For the settings, in the present exemplary embodiment, a screen for inputting setting conditions is displayed on the display unit 25 of the terminal apparatus 20 operated by the user.

In this case, the CPU 11a of the server apparatus 10 further acquires the setting conditions which are conditions set by the user for the generation of the thumbnail image 212. Then, the CPU 11a generates the thumbnail image 212 for the Web page 200 using the acquired setting conditions and the acquired input information 205.

In the example shown in Fig. 11, the user can set to which information input destination the input information 205 transmitted to the server apparatus 10 is input.

In the present exemplary embodiment, as described above, the initial information input field and the additional information input field 301 are provided as the information input destinations of the input information 205. More specifically, in the present exemplary embodiment, as described above, the explanatory text input field and the sticky note format input field are provided as the additional information input field 301.

In the present exemplary embodiment, the user can select any one of the initial information input field, the explanatory text input field, or the sticky note format input field as the setting of to which information input destination the input information 205 transmitted to the server apparatus 10 is input.

In a case in which the user selects an input field from the initial information input field, the explanatory text input field, and the sticky note format input field, the input information 205 associated with the selected input field is transmitted to the server apparatus 10, and the server apparatus 10 generates the thumbnail image 212 on the basis of the input information 205.

Figs. 12A and 12B are diagrams showing other examples of the settings of the user performed on the setting screen.

In the examples shown in Figs. 12A and 12B, it is possible to set whether an object to be compared with the input information 205 is the character string included in the image in the Web page 200 or the in-page character string 234 included in the text of the Web page 200.

In the example shown in Fig. 12A, a case in which setting is performed such that the object to be compared with the input information 205 is the character string included in the image in the Web page 200 as represented by reference numeral 401 is illustrated.

Further, in the example shown in Fig. 12A, the setting of a process that is performed in a case in which there are a plurality of images including the character strings having the similarity exceeding a predetermined threshold value can also be performed.

In this example, a case in which setting is performed such that the thumbnail image 212 is generated on the basis of an image that includes a character string having a high similarity and that has the largest size as represented by reference numeral 402 is illustrated.

In the example shown in Fig. 12B, a case in which setting is performed such that the object to be compared with the input information 205 is the in-page character string 234 included in the text of the Web page 200 as represented by reference numeral 403 is illustrated.

Further, in this example, the setting of a process that is performed in a case in which there are a plurality of in-page character strings 234 is also performed. In this example, a case in which setting is performed such that the thumbnail image 212 is generated on the basis of the in-page character string 234 that has a high similarity and that has the largest size as represented by reference numeral 404 is illustrated.

Further, in this example, a process after the in-page character string 234 is specified is set. In this example, a case in which setting is performed such that the thumbnail image 212 is generated on the basis of the image of the portion in which the in-page character string 234 is located in the Web page 200 as represented by reference numeral 405 is illustrated.

Figs. 13A, 13B, and 13C are diagrams showing a specific example of the process that is performed according to the settings of the user.

Fig. 13A shows a case in which setting is performed such that the thumbnail image 212 is generated on the basis of an image that includes a character string having a high similarity and that has the largest size.

In this case, the thumbnail image 212 is generated on the basis of the image 231 including the character string "Intellectual property department home page" among the images included in the Web page 200 shown in Fig. 13C. As a result, the thumbnail image 212 represented by reference numeral 990 in Fig. 13A is displayed on the terminal apparatus 20.

In addition, Fig. 13B shows a case in which setting is performed such that the thumbnail image 212 is generated on the basis of an image of a portion in which the in-page character string 234 is located in the Web page 200.

In this case, the thumbnail image 212 is generated on the basis of an image of a portion 409 in which a character string "ABC intellectual property department" is located in the Web page 200 shown in Fig. 13C. In accordance with this, the thumbnail image 212 represented by reference numeral 992 in Fig. 13B is displayed on the terminal apparatus 20.

### Supplementary Note

(((1))) An information processing apparatus comprising:
   a processor configured to:
   acquire a Web page;
   acquire input information that is information input by a user; and
   generate a thumbnail image for the acquired Web page using the acquired input information.
(((2))) The information processing apparatus according to (((1))), wherein the processor is configured to:
   acquire a Web page designated by the user; and
   generate a thumbnail image for the Web page designated by the user using the input information.
(((3))) The information processing apparatus according to (((1))) or (((2))), wherein the processor is configured to:
   generate a thumbnail image including at least a portion of an image that is specified on the basis of the acquired input information among images included in the acquired Web page.
(((4))) The information processing apparatus according to any one of (((1))) to (((3))), wherein the processor is configured to:
   generate a thumbnail image including at least a portion of an image, to which information whose similarity to the acquired input information exceeds a predetermined threshold value is attached, among the images included in the acquired Web page.
(((5))) The information processing apparatus according to (((4))), wherein the processor is configured to:
   acquire a character string as the input information; and
   generate a thumbnail image including at least a portion of an image that includes a character string whose similarity to the acquired character string exceeds a predetermined threshold value among the images included in the acquired Web page.
(((6))) The information processing apparatus according to (((5))), wherein the processor is configured to:
   in a case in which the Web page includes a plurality of images including the character string having the similarity exceeding the predetermined threshold value, generate a thumbnail image including at least a portion of an image including a character string that satisfies a predetermined condition among a plurality of character strings having the similarity exceeding the predetermined threshold value.
(((7))) The information processing apparatus according to (((6))), wherein the processor is configured to:
   generate a thumbnail image including at least a portion of an image including a character string that has been first determined to have the similarity exceeding the threshold value among the plurality of character strings having the similarity exceeding the threshold value.
(((8))) The information processing apparatus according to (((6))), wherein the processor is configured to:
   generate a thumbnail image including at least a portion of an image including a character string that has the highest similarity among the plurality of character strings having the similarity exceeding the threshold value.
(((9))) The information processing apparatus according to (((3))), wherein the processor is configured to:
   in a case in which the Web page includes a plurality of images specified on the basis of the acquired input information, generate a thumbnail image including at least a portion of an image that satisfies a predetermined condition among the plurality of images.
(((10))) The information processing apparatus according to (((9))), wherein the processor is configured to:
   generate a thumbnail image including at least a portion of an image that is located at a specific position in the Web page or that is located at a position closest to the specific position among the plurality of images.
(((11))) The information processing apparatus according to (((9))), wherein the processor is configured to:
   generate a thumbnail image including at least a portion of an image that has a specific size among the plurality of images.
(((12))) The information processing apparatus according to (((11))), wherein the processor is configured to:
   generate a thumbnail image including at least a portion of the largest image among the plurality of images.
(((13))) The information processing apparatus according to (((11))), wherein the processor is configured to:
   generate the thumbnail image on the basis of an in-page character string that is specified on the basis of the input information among in-page character strings that are character strings included in the Web page.
(((14))) The information processing apparatus according to (((13))), wherein the processor is configured to:
   generate a thumbnail image including at least a portion of an image that has a predetermined positional relationship with the in-page character string specified on the basis of the input information among images included in the Web page.
(((15))) The information processing apparatus according to (((13))) or (((14))), wherein the processor is configured to:
   acquire an input character string that is a character string input by the user as the input information; and
   generate the thumbnail image on the basis of an in-page character string that is specified on the basis of the input character string among the in-page character strings included in the Web page.
(((16))) The information processing apparatus according to (((15))), wherein the processor is configured to:
   generate the thumbnail image on the basis of an in-page character string whose similarity to the input character string exceeds a predetermined threshold value among the in-page character strings.
(((17))) The information processing apparatus according to any one of (((13))) to (((16))), wherein the processor is configured to:
   in a case in which there are a plurality of the in-page character strings specified on the basis of the input information, generate the thumbnail image on the basis of an in-page character string that satisfies a predetermined condition among the plurality of in-page character strings.
(((18))) The information processing apparatus according to (((17))), wherein the processor is configured to:
   acquire an input character string that is a character string input by the user as the input information; and
   generate the thumbnail image on the basis of an in-page character string that has the highest similarity to the input character string among the plurality of in-page character strings.
(((19))) The information processing apparatus according to (((17))), wherein the processor is configured to:
   generate the thumbnail image on the basis of an in-page character string that is located at a specific position in the Web page or that is located at a position closest to the specific position among the plurality of in-page character strings.
(((20))) The information processing apparatus according to (((17))), wherein the processor is configured to:
   generate the thumbnail image on the basis of an in-page character string that has a specific size among the plurality of in-page character strings.
(((21))) The information processing apparatus according to (((13))), wherein the processor is configured to:
   generate a thumbnail image including an image of a portion in which the in-page character string specified on the basis of the input information is located in the Web page.
(((22))) The information processing apparatus according to any one of (((1))) to (((21))), wherein the processor is configured to:
   in a case in which it is not possible to perform the generation of the thumbnail image using the input information, generate a thumbnail image including at least a portion of an image that satisfies a specific condition among the images included in the Web page.
(((23))) The information processing apparatus according to any one of (((1))) to (((22))), wherein the processor is configured to:
   further acquire a setting condition that is a condition set by the user for the generation of the thumbnail image; and
   generate a thumbnail image for the Web page using the acquired setting condition and the acquired input information.
(((24))) The information processing apparatus according to any one of (((1))) to (((23))), wherein the processor is configured to:
   generate the thumbnail image using the input information that is input by the user and that is displayed in association with a display portion for the thumbnail image to be generated.
(((25))) The information processing apparatus according to (((24))), wherein a pre-generation image that is a predetermined image is displayed in the display portion before the thumbnail image is generated, and
   the processor is configured to:
   generate the thumbnail image using the input information that is input by the user after the pre-generation image is displayed and that is displayed in association with the pre-generation image.
(((26))) A program causing a computer to implement:
   a function of acquiring a Web page;
   a function of acquiring input information that is information input by a user; and
   a function of generating a thumbnail image for the acquired Web page using the acquired input information.

According to the information processing apparatus according to (((1))), it is possible to more easily recognize the Web page based on the thumbnail image, as compared to a case in which the thumbnail image is generated according to only one predetermined condition.

According to the information processing apparatus according to (((2))), it is possible to generate the thumbnail image for the Web page designated by the user.

According to the information processing apparatus according to (((3))), it is possible to generate the thumbnail image including at least a portion of an image that is specified on the basis of the input information among the images included in the Web page.

According to the information processing apparatus according to (((4))), it is possible to generate the thumbnail image including at least a portion of an image to which information similar to the input information is attached among the images included in the Web page.

According to the information processing apparatus according to (((5))), it is possible to generate the thumbnail image including at least a portion of an image that includes a character string similar to the input character string among the images included in the Web page.

According to the information processing apparatus according to (((6))), in a case in which the Web page includes a plurality of images that are the basis of the thumbnail image, it is possible to generate the thumbnail image including at least a portion of an image that includes a character string satisfying a predetermined condition.

According to the information processing apparatus according to (((7))), it is possible to generate a thumbnail image including at least a portion of an image including a character string, whose similarity to the acquired character string has been first determined to exceed a predetermined threshold value, among the character strings whose similarity to the acquired character string exceeds the threshold value in the Web page.

According to the information processing apparatus according to (((8))), it is possible to generate the thumbnail image including at least a portion of an image including a character string that has the highest similarity among the character strings whose similarity to the acquired character string exceeds a predetermined threshold value in the Web page.

According to the information processing apparatus according to (((9))), in a case in which the Web page includes a plurality of images specified on the basis of the acquired input information, it is possible to generate the thumbnail image including at least a portion of an image that satisfies a predetermined condition among the plurality of images.

According to the information processing apparatus according to (((10))), in a case in which the Web page includes a plurality of images specified on the basis of the acquired input information, it is possible to generate the thumbnail image including at least a portion of an image that is located at a specific position in the Web page or that is located at a position closest to the specific position.

According to the information processing apparatus according to (((11))), in a case in which the Web page includes a plurality of images specified on the basis of the acquired input information, it is possible to generate a thumbnail image including at least a portion of an image having a specific size.

According to the information processing apparatus according to (((12))), in a case in which the Web page includes a plurality of images specified on the basis of the acquired input information, it is possible to generate the thumbnail image including at least a portion of the largest image.

According to the information processing apparatus according to (((13))), it is possible to generate the thumbnail image on the basis of an in-page character string that is specified on the basis of the input information among the in-page character strings that are character strings included in the Web page.

According to the information processing apparatus according to (((14))), it is possible to generate the thumbnail image including at least a portion of an image that has a predetermined positional relationship with the in-page character string specified on the basis of the input information among the images included in the Web page.

According to the information processing apparatus according to (((15))), it is possible to generate the thumbnail image on the basis of the in-page character string specified on the basis of the input character string among the in-page character strings included in the Web page.

According to the information processing apparatus according to (((16))), it is possible to generate the thumbnail image on the basis of an in-page character string whose similarity to the input character string exceeds a predetermined threshold value among the in-page character strings.

According to the information processing apparatus according to (((17))), in a case in which there are a plurality of in-page character strings specified on the basis of the input information, it is possible to generate the thumbnail image on the basis of an in-page character string that satisfies a predetermined condition among the plurality of in-page character strings.

According to the information processing apparatus according to (((18))), it is possible to generate the thumbnail image on the basis of an in-page character string having the highest similarity to the input character string among the plurality of in-page character strings.

According to the information processing apparatus according to (((19))), it is possible to generate a thumbnail image on the basis of an in-page character string that is located at a specific position in the Web page or that is located at a position closest to the specific position among the plurality of in-page character strings.

According to the information processing apparatus according to (((20))), it is possible to generate the thumbnail image on the basis of an in-page character string that has a specific size among the plurality of in-page character strings.

According to the information processing apparatus according to (((21))), it is possible to generate the thumbnail image including an image of a portion in which the in-page character string specified on the basis of the input information is located in the Web page.

According to the information processing apparatus according to (((22))), it is possible to generate the thumbnail image even in a case in which it is not possible to perform the generation of the thumbnail image using the input information.

According to the information processing apparatus according to (((23))), it is possible to generate the thumbnail image in consideration of the setting condition that is a condition set by the user for the generation of the thumbnail image.

According to the information processing apparatus according to (((24))), it is possible to generate the thumbnail image using the input information that is input by the user and that is displayed in association with the display portion for the thumbnail image to be generated.

According to the information processing apparatus according to (((25))), it is possible to generate the thumbnail image using the input information that is input by the user after the pre-generation image, which is displayed before the generation of the thumbnail image, is displayed and that is displayed in association with the pre-generation image.

According to the program according to (((26))), it is possible to more easily recognize the Web page based on the thumbnail image, as compared to a case in which the thumbnail image is generated according to only one predetermined condition.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: server apparatus
11a: CPU
200: Web page
205: input information
212: thumbnail image
231: image
234: in-page character string
908: pre-generation image

## Claims

1. An information processing apparatus comprising:
a processor configured to:
acquire a Web page;
acquire input information that is information input by a user; and
generate a thumbnail image for the acquired Web page using the acquired input information.

2. The information processing apparatus according to claim 1, wherein the processor is configured to:
acquire a Web page designated by the user; and
generate a thumbnail image for the Web page designated by the user using the input information.

3. The information processing apparatus according to claim 1 or 2, wherein the processor is configured to:
generate a thumbnail image including at least a portion of an image that is specified on the basis of the acquired input information among images included in the acquired Web page.

4. The information processing apparatus according to any one of claims 1 to 3, wherein the processor is configured to:
generate a thumbnail image including at least a portion of an image, to which information whose similarity to the acquired input information exceeds a predetermined threshold value is attached, among images included in the acquired Web page.

5. The information processing apparatus according to claim 4, wherein the processor is configured to:
acquire a character string as the input information; and
generate a thumbnail image including at least a portion of an image that includes a character string whose similarity to the acquired character string exceeds a predetermined threshold value among the images included in the acquired Web page.

6. The information processing apparatus according to claim 3, wherein the processor is configured to:
in a case in which the Web page includes a plurality of images specified on the basis of the acquired input information, generate a thumbnail image including at least a portion of an image that satisfies a predetermined condition among the plurality of images.

7. The information processing apparatus according to claim 1, wherein the processor is configured to:
generate the thumbnail image on the basis of an in-page character string that is specified on the basis of the input information among in-page character strings that are character strings included in the Web page.

8. The information processing apparatus according to claim 7, wherein the processor is configured to:
generate a thumbnail image including at least a portion of an image that has a predetermined positional relationship with the in-page character string specified on the basis of the input information among images included in the Web page.

9. The information processing apparatus according to claim 7 or 8, wherein the processor is configured to:
acquire an input character string that is a character string input by the user as the input information; and
generate the thumbnail image on the basis of an in-page character string that is specified on the basis of the input character string among the in-page character strings included in the Web page.

10. The information processing apparatus according to any one of claims 7 to 9, wherein the processor is configured to:
in a case in which there are a plurality of the in-page character strings specified on the basis of the input information, generate the thumbnail image on the basis of an in-page character string that satisfies a predetermined condition among the plurality of in-page character strings.

11. The information processing apparatus according to any one of claims 1 to 10, wherein the processor is configured to:
in a case in which it is not possible to perform the generation of the thumbnail image using the input information, generate a thumbnail image including at least a portion of an image that satisfies a specific condition among images included in the Web page.

12. The information processing apparatus according to any one of claims 1 to 11, wherein the processor is configured to:
further acquire a setting condition that is a condition set by the user for the generation of the thumbnail image; and
generate a thumbnail image for the Web page using the acquired setting condition and the acquired input information.

13. The information processing apparatus according to any one of claims 1 to 12, wherein the processor is configured to:
generate the thumbnail image using the input information that is input by the user and that is displayed in association with a display portion for the thumbnail image to be generated.

14. The information processing apparatus according to claim 13,
wherein a pre-generation image that is a predetermined image is displayed in the display portion before the thumbnail image is generated, and
the processor is configured to:
generate the thumbnail image using the input information that is input by the user after the pre-generation image is displayed and that is displayed in association with the pre-generation image.

15. A program causing a computer to implement:
a function of acquiring a Web page;
a function of acquiring input information that is information input by a user; and
a function of generating a thumbnail image for the acquired Web page using the acquired input information.
